# EUROPÄISCHE PATENTSCHRIFT

(11) **EP 1 123 355 B1**
(45) Veröffentlichungstag und Bekanntmachung des Hinweises auf die Patenterteilung: **21.04.2010**
(21) Anmeldenummer: 99969100.9
(22) Anmeldetag: 08.09.1999
(51) Int. Cl.: C09D 5/02, C08J 3/07

(54) **STRUKTURVISKOSE, VON ORGANISCHEN LÖSEMITTELN UND EXTERNEN EMULGATOREN FREIE PULVERKLARLACK-SLURRY, VERFAHREN ZU IHRER HERSTELLUNG UND IHRE VERWENDUNG**
INTRINSICALLY VISCOUS CLEAR POWDER COATING SLURRY WHICH IS FREE OF ORGANIC SOLVENTS AND EXTERNAL EMULSIFIERS, METHOD FOR PRODUCING SAID SLURRY AND USE OF THE SAME
SUSPENSION DE VERNIS CLAIR EN POUDRE AYANT UNE VISCOSITE INTRINSEQUE ET EXEMPTE DE SOLVANTS ORGANIQUES ET D'EMULSIFIANTS EXTERNES, SON PROCEDE DE PRODUCTION ET SON UTILISATION

(30) Priorität: 12.09.1998 DE 19841842
(43) Veröffentlichungstag der Anmeldung: 16.08.2001
(73) Patentinhaber: BASF Coatings GmbH, 48165 Münster (DE)
(72) Erfinder: OTT, Günther, D-48167 Münster (DE); RÖCKRATH, Ulrike, D-48308 Senden (DE); WOLTERING, Joachim, D-48159 Münster (DE); BENDIX, Maximilian, D-59302 Oelde (DE); RAKA, Fatmir, D-48143 Münster (DE); SCHUHMACHER, Ute, D-48165 Münster (DE); POTH, Ulrich, D-48163 Münster (DE)
(74) Vertreter: Leifert & Steffan
(86) Internationale Anmeldenummer: PCT/EP1999/006604
(87) Internationale Veröffentlichungsnummer: WO 2000/015721

(56) Entgegenhaltungen:
- WO-A-96/32452
- WO-A-97/01609
- DE-A- 2 507 842
- DE-A- 19 540 977

## Beschreibung

Die vorliegende Erfindung betrifft eine neue von organischen Lösemitteln und externen Emulgatoren freie Pulverklarlack-Slurry, welche eine Strukturviskosität aufweist. Außerdem betrifft die vorliegende Erfindung ein neues Verfahren zur Herstellung dieser Pulverklarlack-Slurry. Nicht zuletzt betrifft die Erfindung die Verwendung der neuen Pulverklarlack-Slurry für die Herstellung von Klarlacken für den Automobilsektor und den industriellen Sektor, sowie zur Beschichtung von Formteilen.

Für die Beschichtung von Automobilkarosserien werden heute vorzugsweise Flüssiglacke, d. h. Spritzlacke, verwendet. Diese verursachen zahlreiche Umweltprobleme aufgrund ihres Lösemittelgehaltes. Wäßrige Basislacke zum Einsatz in einem Basislack/Klarlack-System sind in der DE 196 52 842 beschrieben. Sie enthalten als filmbildendes Mittel eine Dispersion aus Acrylatpolymeren und einem nicht-assoziativ wirkenden Verdicker. Aus der EP 0 038 127 sind wäßrige Basislacke bekannt, die auf einer Dispersion vernetzter Polymer-Mikropartikel mit einem Teilchendurchmesser von 0,01-10 µm basieren. In beiden Fällen erfolgt nach Ausbildung des geschlossenen Polymerfilms eine Beschichtung mit einem Klarlack. Die Verwendung von Wasserklarlacken verursacht ebenfalls zahlreiche Umweltprobleme, weil diese noch immer gewisse Mengen an organischen Lösemitteln enthalten.

Wasserklarlacke dieser Art sind aus der deutschen Patentschrift DE-A-196 23 371 bekannt. Direkt nach dem Auftragen trocknen die herkömmlichen Wasserklarlacke nicht als Pulver auf, sondern verfließen zu einem geschlossenen Film. Sie enthalten wässrige Sekundärdispersionen und werden im Automobilsektor für wässrige Mehrschichtlackierungen oder wässrige Einkomponenten- oder Zweikomponenten-Klarlacke eingesetzt. Hierbei werden absetzstabile Dispersionen mit einer mittleren Teilchengrößen von ca. 10 bis ca. 200 nm angestrebt. Grund ist die dem Fachmann geläufige Erfahrung, daß Dispersionspartikel um so weniger zum Absetzen neigen, je besser sie stabilisiert sind und je geringer ihre Partikelgröße ist. Für ein sicheres Applikationsverhalten und zur Reduzierung der Kocherneigung ist jedoch die Mitverwendung von bis zu 20 Gew.-% an Lösemitteln notwendig.

Aus diesem Grunde sind in den letzten Jahren vermehrte Anstrengungen unternommen worden, für die Beschichtung Pulverlacke zu verwenden. Die Ergebnisse sind jedoch bisher nicht zufriedenstellend, insbesondere zeigen Pulverklarlacke noch Schwächen hinsichtlich der Chemikalienbeständigkeit und der Vergilbung.

Viele Entwicklungen haben inzwischen das Ziel, Pulverklarlacke in Form wäßriger Dispersionen bereitzustellen, welche sich mit Flüssiglacktechnologien verarbeiten lassen. Aus der Patentschrift US-A-4,268,542 ist beispielsweise ein Verfahren bekannt, bei dem eine Pulverlack-Dispersion auf Basis von Acrylatharzen verwendet wird, welche sich für die Beschichtung von Automobilen eignet. Hierbei wird zunächst eine herkömmliche Pulverschicht auf die Karosserie aufgetragen, wonach man die Pulverlack-Dispersion als Klarlack appliziert. Bei dieser Pulverklarlack-Dispersion, welche von der Fachwelt auch als Pulverslurry oder Pulverklarlack-Slurry bezeichnet wird, werden ionische Verdicker verwendet, welche zu einer relativ hohen Empfindlichkeit der applizierten Klarlackschicht gegen Feuchtigkeit, insbesondere gegen Schwitzwasser, führen.

Aus der europäischen Patentschrift EP-A-0 652 264 ist eine Pulverklarlack-Slurry bekannt, bei der die festen Bindemittel- und Vernetzerkomponenten und gegebenenfalls Zusatzstoffe und Additive, wie es bei der Herstellung von Pulverlacken üblich ist, zunächst gemeinsam extrudiert und anschließend trocken vermahlen werden, wonach sie in einem weiteren Schritt mit Hilfe von Emulgatoren und Netzmitteln in einer Naßvermahlung in eine Pulverklarlack-Slurry überführt werden. Auch die in der deutschen Patentschrift DE 195 40 977 beschriebenen wäßrigen Pulverlack-Dispersionen werden durch Naßvermahlung hergestellt. Sie enthalten epoxygruppenhaltige Polymerisate sowie mindestens einen nicht-ionischen Verdicker und weisen eine Viskosität von 10-1000 mPas bei einer Scherrate von 500 s⁻¹ auf. Allerdings wird ein strukturviskoses Verhalten nicht erreicht.

Patentschrift WO9632452 beschreibt eine wässrige Pulverklarlackdispersion, bestehend aus einer festen, pulverförmigen Komponente A und einer wässrigen Komponente B, wobei Komponente A ein Pulverklarlack ist, enthaltend a) wenigstens ein epoxidhaltiges Bindemittel, b) wenigstens ein Vernetzungsmittel, und Komponente B eine wässrige Dispersion ist, enthaltend a) wenigstens einen nicht-ionischen Assoziatiwerdicker,

Diese üblichen und bekannten Pulverklarlack-Slurries können im Gegensatz zu den Pulverklarlacken in konventionellen Naßlackieranlagen verarbeitet werden und lassen sich bei wesentlich niedrigeren Schichtdicken von ca. 40 µm gegenüber ca. 80 µm bei Pulverlacken mit gutem Verlauf und einer den Pulverlacken vergleichbaren Chemikalienfestigkeit applizieren.

Indes gewährleisten die konventionellen Mahlprozesse nicht immer einen Grad an Homogenisierung der Bestandteile, wie er eigentlich wünschenswert wäre, oder aber er muß durch eine aufwendige Mehrfachextrusion erzielt werden.

Üblicherweise sind in den herkömmlichen Pulverklarlack-Slurries größere Partikel unerwünscht, weil sie zum Sedimentieren neigen. Außerdem zeigen die Pulverklarlack-Slurries bei ihrer Applikation und Vernetzung eine verstärkte Neigung zur Bildung von Kochern (im Lackfilm eingeschlossene blasenförmige Hohlräume).

Ähnlich verhält es sich mit der Rißbildung, dem sogenannten "mudcracking" in den pulverförmigen, bei Raumtemperatur oder leicht erhöhter Temperatur vorgetrockneten, noch nicht eingebrannten Trockenfilmen. Solche Trocknungsrisse verlaufen beim Einbrennen nicht mehr vollständig und bilden im eingebrannten Film sichtbare Verlaufsstörungen in Form von lederstrukturierten Furchen aus, wobei diese Trocknungsrisse um so ausgeprägter und häufiger auftreten, je höher die Trockenfilmschichtdicke ist. Höhere Schichtdicken können bei der elektrostatischen Beschichtung von Automobilkarossen lokal auftreten, wenn an geometrisch besonders exponierten Stellen eine höhere Feldliniendichte vorliegt. Solche Stellen der Überbeschichtung sind besonders anfällig für das Mudcracking.

Aus der deutschen Patentschrift DE-A-196 17 086 ist eine Pulverklarlack-Slurry bekannt, welche eine mittlere Teilchengröße der festen Partikel von 0,1 bis 10 µm aufweist. Vorzugsweise werden hierbei mittlere Teilchengröße von 0, 23 bis 0,43 µm angewandt. Es ist notwendig, zur Stabilisierung zusätzlich zu der ionischen Stabilisierung auch noch externe Emulgatoren anzuwenden - in der Regel Polyethylenoxidaddukte, die die Beständigkeit der Lackierung gegenüber Wasser und Feuchtigkeit vermindern. Außerdem enthalten diese bekannten Pulverklarlack-Slurries noch immer gewisser Mengen an organischen Cosolventien oder Verlaufmittel, welche nicht entfernt werden können, weil sie für die Verlaufseigenschaften des angetrockneten Films essentiell sind. Überdies sind zu ihrer Herstellung spezielle Aggregate wie Druckentspannungshomogenisierdüsen notwendig. Vor ihrer Applikation werden sie mit Hilfe von Verdickern auf die Applikationsviskosität eingestellt; ein komplexes Viskositätsverhalten wird indes nicht beschrieben. Die Patentschrift erteilt ferner keine Lehre, wie das Problem des "mudcracking" bei Pulverklarlack-Slurries gelöst werden könnte.

Aufgabe der vorliegenden Erfindung ist es, eine neue Pulverklarlack-Slurry zur Verfügung zu stellen, welche die Nachteile des Standes der Technik nicht mehr länger aufweist. Insbesondere soll die neue Pulverklarlack-Slurry mit einer geringeren Anzahl an Verarbeitungsschritten herstellbar sein als die herkömmlichen Pulverklarlack-Slurries; dabei sollen sie aber aufgrund ihrer typischen Pulverslurryeigenschaften mit Restlösemittelgehalten von < 1% und ihren vergleichbaren Partikelgrößen ein ähnlich vorteilhaftes Applikationsverhalten aufweisen wie diese. Im Gegensatz zu den bekannten Wasserklarlacken sollen die neuen Pulverklarlack-Slurries ein sichereres Applikationverhalten hinsichtlich Kochern bei den geforderten Filmschichtstärken von ca. 40 - 50 µm auch ohne Zuhilfenahme von organischen Lösemitteln gewährleisten.

Außerdem lag der vorliegenden Erfindung die Aufgabe zugrunde, ein neues Verfahren zur Herstellung von Pulverklarlack-Slurries zu finden, welches den wesentlichen Vorteil der Vermischung der Komponenten in Lösung - die sehr gute Homogenität der resultierenden Partikel - weiterhin wahrt.

Demgemäß wurde die neue, strukturviskose, von organischen Lösemitteln und externen Emulgatoren freie Pulverklarlack-Slurry gefunden, welche feste sphärische Partikel einer mittleren Teilchengröße von 0,8 bis 20 µm und einer maximalen Teilchengröße von 30 µm, mindestens einen ionischen Verdicker und mindestens einen nicht-ionischen Assoziativ-Verdicker enthält, wobei die Pulverklarlack-Slurry einen Gehalt an Ionen bildenden Gruppen von 0,05 bis 1 meq/g, einen Gehalt an Neutralisationsmitteln von 0,05 bis 1 meq/g und eine Viskosität von (i) 50 bis 1500 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹ aufweist.

Im folgenden wird die neue, strukturviskose, von organischen Lösemitteln und externen Emulgatoren freie Pulverklarlack-Slurry der Kürze halber als "erfindungsgemäße Slurry" bezeichnet.

Außerdem wurde das neue Verfahren zur Herstellung einer strukturviskosen, von organischen Lösemitteln und externen Emulgatoren freien erfindungsgemäße Pulverklarlack-Slurry durch
1) Emulgieren einer organischen Lösung, enthaltend Bindemittel und Vernetzer, wodurch eine Emulsion vom Typ Öl-in-Wasser resultiert,
2) Entfernen des organischen Lösemittels oder der organischen Lösemittel und
3) teilweisen oder völligen Ersatz des entfernten Lösemittelvolumens durch Wasser, wodurch eine Pulverklarlack-Slurry mit festen sphärischen Partikeln resultiert,
   gefunden, bei welchem der Pulverklarlack-Slurry
4) noch mindestens ein ionischer, insbesondere anionischer, Verdicker und mindestens ein nichtionischer Assoziativ-Verdicker zugesetzt wird.

Im folgenden wird das neue Verfahren zur Herstellung einer strukturviskosen, von organischen Lösemitteln und externen Emulgatoren freien Pulverklarlack-Slurry der Kürze halber als "erfindungsgemäBes Verfahren" bezeichnet.

Für die erfindungsgemäße Slurry ist es wesentlich, daß die mittlere Teilchengröße der festen Partikel bei 0,8 bis 20 µm, und besonders bevorzugt bei 3 bis 15 µm liegt. Unter mittlerer Teilchengröße wird der nach der Laserbeugungsmethode ermittelte 50%-Medianwert verstanden, d.h., 50% der Partikel haben einen Teilchendurchmesser ≤ dem Medianwert und 50% der Partikel einen Teilchendurchmesser ≥ dem Medianwert.

Slurries mit derartigen mittleren Teilchengrößen und einem Lösemittelgehalt von < 1% weisen ein besseres Applikationsverhalten auf und zeigen bei den applizierten Filmstärken von > 30 µm, wie sie derzeitig in der Automobilindustrie bei der Endlackierung von Automobilen praktiziert werden, eine deutlich geringere Neigung zu Kochern und zum "mudcracking" als herkömmlicher Pulverklarlack-Slurries.

Die Teilchengröße findet ihre obere Begrenzung dann, wenn die Partikel aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 µm für sinnvoll erachtet, da ab dieser Teilchengröße mit einer Verstopfung der Sprühdüsen der hochempfindlichen Applikationsapparaturen zu rechnen ist.

Die erfindungsgemäße Slurry ist frei von organischen Lösemitteln. Im Rahmen der vorliegenden Erfindung bedeutet dies, daß sie einen Restgehalt an flüchtigen Lösemitteln von < 1 Gew.-%, bevorzugt < 0,5 Gew.-% und besonders bevorzugt < 0,2 Gew.-% hat. Erfindungsgemäß ist es von ganz besonderem Vorteil, wenn der Restgehalt unterhalb der gaschromatographischen Nachweisgrenze liegt.

In gleicher Weise ist im Rahmen der vorliegenden Erfindung die Angabe "frei von externen Emulgatoren" zu verstehen.

Die vorstehend beschriebenen erfindungsgemäß zu verwendenden Teilchengrößen werden somit auch ohne Zuhilfenahme von zusätzlichen externen Emulgatoren erhalten, wenn das Bindemittel einen Gehalt an Ionen bildenden Gruppen, entsprechend einer mittleren Säurezahl oder Amin-Zahl von 3 bis 56 g KOH/g Festkörper (MEQ-Säure oder -Amin von 0,05 bis 1,0 meq/g Festkörper), vorzugsweise bis 28 (MEQ-Säure oder -Amin: 0,5) und insbesondere bis 17 (MEQ-Säure oder -Amin: 0,3), enthält.

Es wird erfindungsgemäß generell ein niedriger Gehalt solcher Gruppen angestrebt, da bei Verwendung der gebräuchlichen Vernetzungsmittel, wie zum Beispiel blockierten Polyisocyanaten, freie Gruppen dieser Art im Film zurückbleiben und diese die Festigkeit gegenüber Umweltstoffen und Chemikalien vermindern können. Andererseits muß der Säuregruppengehalt noch genügend hoch sein, um die gewünschte Stabilisierung zu gewährleisten.

Die Ionen bildenden Gruppen werden mit Hilfe von Neutralisationsmitteln zu 100% oder auch nur zu < 100% teilneutralisiert. Die Menge des Neutralisationsmittels wird in der Weise gewählt, daß der MEQ -Wert der erfindungsgemäßen Slurry unterhalb 1, vorzugsweise unterhalb 0,5 und insbesondere unterhalb 0, 3 meq/g Festkörper. Erfindungsgemäß ist es von Vorteil, wenn die Menge des Neutralisationsmittels mindestens einem MEQ-Wert von 0,05 meq/g Festkörper entspricht.

Die chemische Natur des Bindemittels ist daher in der Regel nicht beschränkend, solange hierin Ionen bildende Gruppen enthalten sind, die über eine Neutralisation in Salzgruppen überführbar sind und dadurch eine ionische Stabilisierung der Partikel in Wasser übernehmen können.

Als Anionen bildende Gruppen kommen Säuregruppen wie Carbonsäure-, Sulfonsäure- oder Phosphonsäuregruppen in Betracht. Demgemäß werden als Neutralisationsmittel Basen, wie Alkalimetallhydroxide, Ammoniak oder Amine verwendet. Alkalimetallhydroxide sind nur inbeschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden wasserlösliche tertiäre Amine bevorzugt. Beispielhaft seien N,N-Dimethylethanolamin oder Aminomethylpropanol-amin (AMP) genannt.

Als Kationen bildende Gruppen kommen primäre, sekundäre oder tertiäre Amine in Betracht. Demgemäß werden als Neutralisationsmittel insbesondere niedermolekulare organische Säuren wie Ameisensäure, Essigsäure oder Milchsäure verwendet.

Bindemittel, welche Kationen bildende Gruppen enthalten, sind von dem Gebiet der Elektrotauchlacke bekannt. Beispielhaft sei auf die Patentschriften EP-A-0 012 463, EP-A- 0 612 818 oder US-A- 4,071,428 verwiesen.

Für den bevorzugten Einsatz der erfindungsgemäß Slurry in der Automobildecklackierung als unpigmentierte Klarlacke werden Polymere oder Oligomere mit Säuregruppen als Ionen bildende Gruppen bevorzugt, da diese sogenannten anionischen Bindemittel in der Regel eine bessere Resistenz gegen Vergilbung als die Klasse der kationischen Bindemittel aufweisen.

Doch kationische Bindemittel mit in Kationen überführbaren Gruppen wie Aminogruppen sind prinzipiell ebenfalls verwendbar, sofern das Einsatzgebiet deren typische Nebeneigenschaften wie ihre Neigung zur Vergilbung verkraftet.

Als Bindemittel, welche Anionen bildende Gruppen enthalten, können beliebige Harze mit den vorstehend genannten Säuregruppen verwendet werden. Es ist jedoch wesentlich, daß sie daneben noch weitere Gruppen tragen, die eine Vernetzbarkeit gewährleisten. Erfindungsgemäß werden Hydroxylgruppen bevorzugt.

Als erfindungsgemäß zu verwendende Oligomere und Polymere dieser Art kommen hydroxylgruppenhaltige, vorzugsweise lineare und/oder verzweigte und/oder blockartig, kammartig und/oder statistisch aufgebaute Poly(meth)acrylate, Polyester, Alkyde, Polyurethane, acrylierte Polyurethane, acrylierte Polyester, Polylactone, Polycarbonate, Polyether, (Meth)Acrylatdiole oder Polyharnstoffe in Betracht.

Neben dem Hydroxylgruppen können die Oligomere und Polymere noch andere funktionelle Gruppen wie Acryloyl-, Ether-, Amid -, Imid -, Thio -, Carbonat- oder Epoxidgruppen enthalten, sofern diese nicht die Vernetzungsreaktionen stören.

Diese Oligomere und Polymere sind dem Fachmann bekannt, und zahlreiche geeignete Verbindungen sind am Markt erhältlich.

Erfindungsgemäß sind die Polyacrylate, die Polyester, die Alkydharze, die Polyurethane und/oder die acrylierten Polyurethane von Vorteil und werden deshalb bevorzugt verwendet.

Beispiele geeigneter Polyacrylate werden in der europäischen Patentanmeldung EP-A-0 767 185 und den amerikanischen Patentschriften US-A- 5 480 493, 5 475 073 oder 5 534 598 beschrieben. Weitere Beispiele besonders bevorzugter Polyacrylate werden unter der Marke Joncryl^{R} vertrieben, wie etwa Joncryl^{R} SCX 912 und 922,5. Die Herstellung dieser Polyacrylate ist allgemein bekannt und wird beispielsweise in dem Standardwerk Houben-Weyl, Methoden der organischen Chemie, 4. Auflage, Band 14/1, Seiten 24 bis 255, 1961, beschrieben.

Die Herstellung der erfindungsgemäß bevorzugt verwendeten Polyester und Alkydharze ist allgemein bekannt und wird beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, bschrieben.

Die erfindungsgemäß besonders bevorzugt zu verwendenden Polyurethane und/oder acrylierten Polyurethane werden beispielsweise in den Patentschriften EP-A-0 708 788, DE-A-44 01 544 oder DE-A-195 34 361 beschrieben.

Als Vernetzer sind alle auf dem Gebiet der lichtstabilen Decklacke gebräuchlichen Vernetzungsmittel geeignet. Beispiele hierfür sind veretherte Melamin-Formaldehydharze, Benzoguanaminharze, Siloxangruppen enthaltende Verbindungen oder Harze, Anhydridgruppen enthaltende Verbindungen oder Harze, Epoxidgruppen enthaltende Verbindungen oder Harze, blockierte und/oder unblockierte Polyisocyanate und/oder Tris(alkoxycarbonylamino)triazine wie sie in den Patentschriften US-A-4 939 213, US-A-5 084 541, US-A-5 288 865 oder EP-A-0 604 922 beschrieben werden. Erfindungsgemäß sind die blockierten Polyisocyanate vorteilhaft und werden deshalb besonders bevorzugt verwendet. Beispiele geeigneter blockierter Polyisocyanate werden in den deutschen Patentschriften DE-A-196 17 086 und 196 31 269 sowie in den europäischen Patentschriften EP-A-0 004 571 und 0 582 051 beschrieben.

Die erfindungsgemäßer Slurry enthält nichtionische und ionische Verdicker. Hierdurch wird der Neigung der vergleichsweise großen festen Partikel zur Sedimentation wirksam begegnet.

Beispiele nichtionischer Verdicker sind Hydroxiethylcellulose und Polyvinylalkohole. Sogenannte, nichtionische Assoziativ-Verdicker sind in vielfältiger Auswahl ebenfalls am Markt verfügbar. Sie bestehen in der Regel aus wasserverdünnbaren Polyurethanen, die Reaktionsprodukte von wasserlöslichen Polyetherdiolen, aliphatischen Diisocyanaten und monofunktionellen hydroxylischen Verbindungen mit organophilem Rest sind.

Ebenfalls kommerziell erhältlich sind ionische Verdicker. Diese enthalten üblicherweise anionische Gruppen und basieren insbesondere auf speziellen Polyacrylatharzen mit Säuregruppen, die teilweise oder vollständig neutralisiert sein können.

Beispiele geeigneter, erfindungsgemäß zu verwendender Verdicker sind aus dem Lehrbuch "Lackadditive" von Johan Bielemann, Wiley-VCH, Weinheim, New York, 1998, Seiten 31 bis 65, bekannt.

Für die erfindungsgemäße Slurry ist es wesentlich, daß beide der vorstehend beschriebenen Verdicker-Typen hierin enthalten sind. Die Menge der zuzusetzenden Verdicker und das Verhältnis von ionischem zu nichtionischem Verdicker richtet sich nach der gewünschten Viskosität der erfindungsgemäß Slurry, die wiederum von der benötigten Absetzstabilität und den speziellen Bedürfnissen der Spritzapplikation vorgegeben werden. Der Fachmann kann daher die Menge der Verdicker und das Verhältnis der Verdicker-Typen zueinander anhand einfacher Überlegungen gegebenenfalls unter Zuhilfenahme von Vorversuchen ermitteln.

Erfindungsgemäß wird ein Viskositätsbereich von 50 bis 1500 mPas bei einer Scherrate von 1000 s⁻¹ und von 150 bis 8000 mPas bei einer Scherrate von 10 s⁻¹ sowie von 180 bis 12000 mPas bei einer Scherrate von 1 s⁻¹ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, daß ein Absetzen der festen Partikel größtenteils verhindert wird oder ein Wiederaufrühren der während der Lagerzeit nur schwach abgesetzten erfindungsgemäßen Pulverslurry gewährleistet ist.

Die festen Partikeln der erfindungsgemäßen Slurry können neben den vorstehend beschriebenen wesentlichen Bestandteilen Additive enthalten, wie sie in Klarlacken üblicherweise verwendet werden. Hierbei ist es wesentlich, daß diese Additive die Glasübergangstemperatur Tg der Bindemittel nicht wesentlich absenken.

Beispiele geeigneter Additive sind Polymere, Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, Korrosionsinhibitoren, Biozide, Flammschutzmittel oder Polymerisationsinhibitoren, insbesondere Photoinhibitoren, wie sie in dem Buch "Lackadditive" von Johan Bielemann, Wiley-VCH, Weinheim, New York, 1998, beschrieben werden.

Der erfindungsgemäßen Slurry können im Film einvernetzbare Verlaufshilfsmittel,
Reaktivverdünner oder vernetzende polyolische Komponenten zugesetzt werden. Wichtig ist jedoch, daß diese Komponenten sich bevorzugt in der äußeren, wässrigen Phase der erfindungsgemäßen Slurry befinden und nicht in der dispersen organischen Phase, wo sie eine Absenkung der Glasübergangstemperatur Tg und damit eine Koaleszenz oder Koagulation von gegebenenfalls abgesetzten Partikeln bewirken würden.

Beispiele für geeignete Verbindungen dieser Art sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht M_{w} von 600 bis 1100 auf;

Weiterer Beispiele für geeignete Verbindungen diese Art sind verzweigte, cyclische und/oder acyclische C₉-C₁₆-Alkane, die mit mindestens zwei Hydroxylgruppen funktionalisiert sind, insbesondere Diethyloctandiole, sowie Cyclohexandimethanol, Hydroxypivalinsäureneopentylglykolester, Neopentylglykol, Trimethylolpropan oder Pentaerythrit.

Erfindungsgemäß ist es von Vorteil, die erfindungsgemäße Slurry mit Hilfe des erfindungsgemäßen Verfahrens herzustellen.

Bei dem erfindungsgemäßen Verfahren werden die ionisch stabilisierbaren Bindemittel und die Vernetzer sowie gegebenenfalls die Additive in organischer Lösung gemischt und zusammen mit Hilfe von Neutralisationmitteln in Wasser nach dem Sekundärdispersionsverfahren dispergiert. Sodann wird mit Wasser unter Rühren verdünnt. Es bildet sich zunächst eine Wasser-in-Öl-Emulsion aus, die bei weiterer Verdünnung in eine Öl-in- Wasser-Emulsion umschlägt. Dieser Punkt wird im allgemeinen bei Festkörpergehalten von < 50 Gew.-%, bezogen auf die Emulsion, erreicht und ist äußerlich an einem stärkeren Abfall der Viskosität während der Verdünnung erkennbar.

Die so erhaltene, noch lösemittelhaltige Emulsion wird anschließend durch azeoptrope Destillation von Lösemitteln befreit.

Die Destillationstemperatur richtet sich in erster Linie nach der Glasübergangstemperatur Tg des Bindemittels. Um Koagulate, d.h. ein Verfließen der erfindungsgemäß nur geringfügig stabilisierten Partikel zu einer separaten kontinuierlichen organischen Phase während der Destillation zu vermeiden, ist es wesentlich, die Destillationstemperatur unterhalb der Glasübergangstemperatur Tg zu halten. Die Glasübergangstemperatur ist ersatzweise auch über die Mindestfilmbildetemperatur der Dispersion beschreibbar. Die Mindestfilmbildetemperatur kann ermittelt werden, indem die Dispersion mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet.

Erfindungsgemäß ist es von Vorteil, wenn die Mindestfilmbildetemperatur mehr als 20 °C, insbesondere mehr als 30 °C beträgt.

Erfindungsgemäß ist es von Vorteil, wenn die zu entfernenden Lösemittel bei einer Destillationstemperatur unterhalb 70°C, bevorzugt unterhalb 50°C und insbesondere unterhalb 40°C abdestilliert werden. Gegebenenfalls wird der Destillationsdruck hierbei so gewählt, daß bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion in einer Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur Tg der dispergierten Teilchen an, und es bildet sich anstelle der bisherigen lösemittelhaligen Emulsion (flüssig-in-flüssig-Dispersion) eine fest-in-flüssig-Dispersion, die erfindungsgemäße Slurry aus.

Die erfindungsgemäße Slurry weist vorteilhafterweise einen Festkörpergehalt von 10 bis 60 Gew.-%, insbesondere von 20 bis 50 Gew.-%, auf.

Zur Herstellung der erfindungsgemäßen Klarlacke wird die erfindungsgemäße Slurry auf das zu beschichtende Substrat appliziert. Hierbei brauchen keine besonderen Maßnahmen ergriffen zu werden, sondern die Applikation kann nach den üblichen und bekannten Verfahren erfolgen, was ein weiterer besonderer Vorteil der erfindungsgemäßen Slurry ist.

Nach ihrer Applikation trocknet die erfindungsgemäße Slurry problemlos auf und zeigt bei der Verarbeitungstemperatur, in der Regel bei Raumtemperatur, kein Verfilmen. D.h., die als Naßschicht applizierte erfindungsgemäße Slurry lüftet bei Raumtemperatur oder leicht erhöhten Temperaturen unter Wasserabgabe ab, ohne daß die darin enthaltenen Partikel ihre ursprüngliche feste Form verändern. Die pulverförmige feste Film läßt das Restwasser leichter Abdampfen als ein verfließender Naßfilm. Dadurch wird die Gefahr von im gehärteten Film eingeschlossenen Blasen von verdampftem Wasser ("Kochern") vermindert. Außerdem ist die Neigung zum "mudcracking" ausgesprochen gering. Überraschend ist hier bei der Befund, daß die erfindungsgemäßen Slurries eine umso geringere Neigung zu "mudcracking" haben, je höher ihre Partikelgrößen sind.

In dem nachfolgenden Einbrennschritt wird die nun weitgehend wasserfreie Pulverschicht geschmolzen und zur Vernetzung gebracht. In manchen Fällen kann es von Vorteil sein, den Verlaufsprozess und die Vernetzungsreaktion mit einem zeitlichen Versatz ablaufen zu lassen, indem ein Stufenheizprogramm oder eine sogenannte Aufheizrampe gefahren wird. Die für die vorliegenden Beispiele angemessene Vernetzungstemperatur liegt zwischen 120 und 160°C. Die entsprechende Einbrennzeit liegt zwischen 20 und 60 Minuten.

Der hierbei resultierende Klarlack weist hervorragende anwendungstechnische Eigenschaften auf. So haftet der erfindungsgemäße Klarlacke fest auf allen üblichen und bekannten Basislackschichten oder auf Substraten wie Metall, Glas, Holz oder Kunststoff. Er ist von hohem Glanz, glatt, kratzfest, witterungsbeständig und frei von Störungen. Außerdem kommt er aufgrund seines vorteilhaften Eigenschaftsprofils auch für Anwendungen außerhalb der Automobillackierung in Betracht, insbesondere für die Lackierung von Möbeln und die industrielle Lackierung.

### Beispiele

### Herstellungsbeispiel 1

### Die Herstellung von Polyacrylatharzen in Lösung

### 1.1 Die Herstellung des Lösungspolyacrylatharzes A

1291,5 Teile Methylisobutylketon (MIBK) und 43,0 Teile Mercaptoethanol wurden in einem Reaktionsgefäß vorgelegt und auf 100°C erwärmt. Zu der Vorlage wurden bei 100°C binnen 5 h über zwei getrennte Zulaufbehälter der Initiator, bestehend aus 143,5 Teilen TBPEH (tert.-Butylperethylhexanoat) und 86,1 Teilen MIBK, und die Monomerenmischung, bestehend aus 485,0 Teilen tert.-Butylacrylat, 254,0 Teilen n-Butylmethacrylat, 213,8 Teilen Cyclohexylmethacrylat, 409,0 Teilen Hydroxipropylmethacrylat und 73,2 Teilen Acrylsäure, zudosiert. Anschließend wurde auf 110°C erwärmt, und im Vakuum wurden bei 500 mbar ein Teil der flüchtigen Komponenten der Reaktionsmischung während 5 h abgezogen. Danach ließ man auf 80°C erkalten und trug die Harzlösung aus.

Die Harzlösung wies die folgenden Kennzahlen auf:

| | |
|---|---|
| Festkörper: | 70,2% (1h bei 130°C) |
| Viskosität: | 25,5 dPas (Platte-Kegel-Viskosimeter, bei 23°C; 70%-ige Lösung) |
| Säurezahl: | 43,4 mg KOH/g Festharz |

### 1.2 Die Herstellung des Lösungspolyacrylatharzes B

1076,7 Teile Methylisobutylketon (MIBK) und 35,9 Teile Mercaptoethanol wurden in einem Reaktionsgefäß vorgelegt und auf 100°C erwärmt. Zu der Vorlage wurden bei 100°C binnen 5 h über zwei getrennte Zulaufbehälter der Initiator, bestehend aus 119,6 Teilen TBPEH (tert.-Butylperethylhexanoat) und 71,8 Teilen MIBK, und die Monomerenmischung, bestehend aus 404,2 Teilen tert.-Butylacrylat, 211,7 Teilen n-Butylmethacrylat, 239,2 Teilen Cyclohexylmethacrylat und 340,9 Teilen Hydroxipropylmethacrylat zudosiert. Anschließend wurde auf 115°C erwärmt, und im Vakuum wurden bei 500 mbar ein Teil der flüchtigen Anteile während 3 h abgezogen. Danach ließ man auf 80°C erkalten und trug die Harzlösung aus.

Die Harzlösung wies folgende Kennzahlen auf:

| | |
|---|---|
| Festkörper | 71,3% (1h bei 130°C) |
| Viskosität: | 19,2 dPas (Platte-Kegel-Viskosimeter, bei 23°C; 70%-ige Lösung) |
| Säurezahl: | 5 mg KOH/g Festharz. |

### Herstellungsbeispiel 2

### Die Herstellung eines blockierten Polyisocyanats als Vernetzer

837 Teile Isophorondüsocyanat wurden in einem geeigneten Reaktionsgefäß vorgelegt und mit 0,1 Teilen Dibutylzinndilaurat versetzt. Sodann ließ man eine Lösung aus 168 Teilen Trimethylolpropan und 431 Teilen Methylethylketon langsam zulaufen. Durch die exotherme Reaktion stieg die Temperatur an. Nachdem 80°C erreicht waren, wurde die Temperatur durch äußere Kühlung konstant gehalten, und der Zulauf wurde gegebenenfalls leicht gedrosselt. Nach Ende des Zulaufs hielt man noch für ca. 1 Stunde auf dieser Temperatur, bis der Isocyanatgehalt des Festkörpers 15,7 % (bezogen auf NCO-Gruppen) erreicht hatte. Anschließend wurde das Reaktionsgemisch auf 40°C gekühlt, und es wurde eine Lösung von 362 Teilen 3,5-Dimethylpyrazol in 155 Teilen Methylethylketon innerhalb 30 Minuten zugegeben. Nachdem das Reaktionsgemisch sich durch die Exothermie auf 80°C erwärmt hatte, hielt man die Temperatur für 30 Minuten konstant, bis der NCO-Gehalt auf kleiner 0,1 % abgesunken war. Sodann fügte man 47 Teile n-Butanol zu der Reaktionsmischung hinzu, hielt für weitere 30 Minuten bei 80°C und trug sie nach kurzer Kühlung aus.

Das Reaktionsprodukt wies einen Festgehalt von 69,3% (1h bei 130°C) auf.

### Beispiele 1 und 2

### Die Herstellung der erfindungsgemäßen Pulverklarlack-Slurries 1 und 2

### Beispiel 1

### Die Herstellung der erfindungsgemäßen Pulverklarlack-Slurry 1 auf der Basis des Lösungspolyacrylatharzes A gemäß dem Herstellungsbeispiel 1.1

812,1 Teile der Acrylatharzlösung A gemäß dem Herstellungsbeispiel 1.1 und 492,5 Teile der Vernetzerlösung gemäß Herstellungsbeispiel 2 wurden bei Raumtemperatur in einem offenen Rührgefäß 15 min lang unter Rühren vermischt. Man fügte sodann 16,2 Teile Cyagard 1164 (UV-Absorber der Firma Cytec), 9,6 Teile Tinuvin flüssig 123 (sterisch gehindertes Amin "HALS" der Firma Ciba Geigy), 15,2 Teile N,N-Dimethylethanolamin und 7,0 Teile Dibutylzinndilaurat (DBTL) hinzu und rührt für weitere 2 h bei Raumtemperatur. Sodann verdünnte man die Mischung mit 561,3 Teilen vollentsalztem Wasser in kleinen Portionen. Nach einer Zwischenpause von 15 min. wurden weitere 676,0 Teile VE-Wasser zugegeben. Es bildete sich eine niedrigviskose wässrige Emulsion mit einem theoretischen Festkörpergehalt von 37%, die bei Raumtemperatur für weitere 48 Stunden gerührt wurde. Die abgedunstete Flüssigkeitsmenge wurde durch Zugabe von VE-Wasser bis zum ursprünglichen Füllstand ergänzt. Man erhielt eine pulverförmige Klarlacksuspension (Slurry) mit folgenden Kennzahlen:

| | |
|---|---|
| Festkörper (2 h 80°C): | 35,6% |
| MEQ-Säure: | 0,52 meq/g Festkörper |
| MEQ-Base: | 0,22 meq/g Festkörper |
| Lösemittelgehalt: | < 0,05% (gaschromatographisch) |
| Partikelgröße: | 6 µm (D.50; Laserbeugungsmessgerätder Firma |
| | Malvern) |

In 1000 Teile dieser Pulverklarlack-Slurry wurden zur Einstellung der gewünschten Strukturviskosität 8,7 Teile Acrysol RM 8 (nicht ionischer Assoziativ-Verdicker der Firma Rohm & Haas) und 6,0 Teile Viskalex HV 30 (anionischer Verdicker auf Polyacrylatharzbasis der Firma Allied Colloids) eingerührt. Die resultierende erfindungsgemäße Pulverklarlack-Slurry 1 zeigte das nachfolgende Viskositätsprofil:
1405 mPas bei einer Scherrate von 10 s⁻¹
791 mPas bei einer Scherrate von 100 s⁻¹
308 mPas bei einer Scherrate von 1000 s⁻¹

Die erfindungsgemäße Pulverklarlack-Slurry 1 hatte eine Mindestfilinbildetemperatur von 35°C. Nach 4-wöchiger Lagerung bei Raumtemperatur zeigte sich ein geringer, nur locker abgesetzter Bodensatz, der mit einem einfachen Laborrührer innerhalb 5 min wieder sehr homogen aufgerührt werden konnte.

### Beispiel 2

### Die Herstellung der erfindungsgemäßen Pulverklarlack-Slurry 2 auf der Basis der Lösungspolyacrylatharze A und B gemäß dem Herstellungsbeispiel 1.2

331,0 Teile des Acrylatharzes A gemäß Herstellungsbeispiel 1.1, 774,5 Teile des Acrylatharzes B gemäß Herstellungsbeispiel 1.2 und 715,8 Teile der Vernetzerlösung gemäß Herstellungsbeispiel 2 wurden wie in Beispiel 1 beschrieben miteinander vermischt. Dann fügte man 4,8 Teile Cyagard 1146,7,6 Teile Tinuvin 123, 10,0 Teile N,N-Dimethylethanolamin und 5,5 Teile DBTL zu. Nach 2 Stunden Rühren gab man 723,0 Teile VE-Wasser in kleinen Portionen zu und verdünnte die resultierende Mischung 15 min später mit weiteren 910,0 Teilen VE-Wasser. Die so erhaltene Pulverklarlackdispersion wurde in einen Reaktor überführt, und das Lösemittel wurde als Azeotrop mit dem mit übergehenden Wasser unter Vakuum bei 25 bis 35°C entfernt, wobei die Destillatmenge im Verlaufe der Destillation durch 2000 Teile VE-Wasser in kleinen Portionen über einen Vakuumtropftrichter mit Dreiwegehahn ersetzt wurde. Man setzte die Destillation so lange fort, bis kein Restlösemittel mehr feststellbar war. Die so erhaltene Pulverklarlack-Slurry wies die folgenden Kennzahlen auf:

| | |
|---|---|
| Festkörper (2 h 80°C): | 4.4,3% |
| MEQ-Säure: | 0,19 meq/g Festkörper |
| MEQ-Base: | 0,10 meq/g Festkörper |
| Lösemittelgehalt: | < 0,05% (gaschromatographisch) |
| Partikelgröße: | 7 µm (D.50; Laserbeugungsmessgerät der Firma Malvern) |

In 1000 Teile dieser Pulverklarlack-Slurry wurden zur Einstellung der gewünschten Strukturviskosität 7,8 Teile Acrysol RM 8 und 4,7 Teile Viskalex HV 30 eingerührt. Die erfindungsgemäße Pulverklarlack-Slurry 2 zeigte das nachfolgende Viskositätsprofil:
5243 mPas bei einer Scherrate von 10 s⁻¹
569 mPas bei einer Scherrate von 1000 s⁻¹.

Die Mindestfilmbildetemperatur lag bei 43°C. Die erfindungsgemäße Pulverklarlack-Slurry 2 war nach 3-wöchiger Lagerung bei Raumtemperatur dickflüssig und zeigt keinen Bodensatz. Nach Rühren mit einem einfachen Laborrührer stellte sich innerhalb 2 min wieder der dünnflüssiger Zustand ein, in dem die erfindungsgemäße Pulverklarlack-Slurry 2 appliziert wurde.

### Beispiele 3 und 4

### Die Verwendung der erfindungsgemäßen Pulverklarlack-Slurries 1 (Beispiel 3) und 2 (Beispiel 4) zur Herstellung von Klarlacken

Zur Applikation der erfindungsgemäßen Pulverklarlack-Slurries 1 und 2 wurde ein sogenannter integrierter Aufbau vorbereitet, der nachfolgend für den Metallicfarbton "Meteorgrau" beschrieben wird:

Auf mit handelsüblichem Elektrotauchlack kathodisch beschichteten Stahltafeln wurde mit einer Becherpistole zunächst eine Funktionsschicht (Ecoprime® Meteorgrau; BASF Coatings AG) appliziert. Nach 5-minütigem Ablüften bei Raumtemperatur wurde auf diese Schicht in gleicher Weise ein meteorgrauer Wassermetallic-Basislack (Ecostar® Meteorgrau; BASF Coatings AG) appliziert und anschließend für 5 min bei 80°C vorgetrocknet.

Nach Abkühlen der Tafeln wurden in gleicher Weise die erfindungsgemäßen Pulverklarlack-Slurries 1 (Beispiel 3) und 2 (Beispiel 4) appliziert. Hiernach ließ man die Tafeln zunächst 5 min ablüften und anschließend 15 min lang bei 40°C vortrocknen. Dann wurden sie für 30 min bei 145°C eingebrannt.

Es resultierte bei Beispiel 3 eine Wassermetallic-Gesamtlackierung in dem Farbton "Meteorgrau". Die applizierten Naßschichten waren so gewählt, daß nach dem Einbrennen die Trockenschichtdicken für die Funktionsschicht und den Wassermetallic-Basislack jeweils bei 15 µm lagen. Der erfindungsgemäße Klarlack 1 hatte eine Schichtdicke von 40 bis 45 µm.

Die in gleicher Weise hergestellte zweite Tafel mit der erfindungsgemäßen Pulverklarlack-Slurry 2 (Beispiel 4) wies für die Funktionsschicht und den Wassermetallic-Basislack wiederum eine Schichtdicke von jeweils 15 µm auf. Der erfindungsgemäße Klarlack 2 hatte eine Schichtdicke von 44 bis 48 µm.

Beide erfindungsgemäßen Lackierungen zeigten ein hervorragendes Aussehen und eine hohe Beständigkeit im Chemikalientest. Bei den applizierten Klarlackschichtdicken sind keine Störungen in Form von Kochern und Mudcracking erkennbar.

Die nachfolgenden Tabelle gibt einen Überblick über die durchgeführten Tests und die hierbei erhaltenen Ergebnisse.

### Tabelle:

### Die anwendungstechnischen Eigenschaften der erfindungsgemäßen Klarlacke 1 (Beispiel 3) und 2 (Beispiel 4)

| **Eigenschaften** | **Beispiele 3** | **Beispiel 4** |
|---|---|---|
| Klarlack-Schichtdicke | 40 - 45 µm | 44-48 µm |
| Glanz bei 20°*⁾ | 77 | 77 |
| Haze*⁾ | 80 | 84 |
| Aussehen | brilliant | glänzend |
| Verlauf | sehr gut | gut |
| Kocher | keine | keine |
| Mudcracking | kein | kein |
| **Chemikalienbeständigkeit **)** | | |
| Schwefelsäure 1 %-ig | 56 | 46 |
| Pankreatin | 54 | >58 |
| Baumharz | 44 | 41 |
| Wasser | 54 | 49 |

| | | |
|---|---|---|
| *) Meßgerät, Hersteller Fa. Byk; **) Messung mittels Gradientenofen, Hersteller Fa. Byk. Der Zahlenwert gibt die untere Temperatur an, ab der auf der Lackierung aufgetragene Tropfen der entsprechenden Substanz sichbare Spuren hinterlassen; | | |

## Patentansprüche

1. Strukturviskose, von organischen Lösemitteln und externen Emulgatoren freie Pulverklarlack-Slurry, enthaltend feste sphärische Partikel einer mittleren Teilchengröße von 0,8 bis 20 µm und einer maximalen Teilchengröße von 30 µm, mindestens einen ionischen Verdicker und mindestens einen nicht-ionischen Assoziativ-Verdicker, wobei die Pulverklarlack-Slurry einen Gehalt an Ionen bildenden Gruppen von 0,05 bis 1 meq/g, einen Gehalt an Neutralisationsmitteln von 0,05 bis 1 meq/g und eine Viskosität von (i) 50 bis 1500 mPas bei einer Scherrate von 1000 s⁻¹; (ii) 150 bis 8000 mPas bei einer Scherrate von 10 s⁻¹ und (iii) 180 bis 12000 mPas bei einer Scherrate von 1 s⁻¹ aufweist.

2. Die Pulverklarlack-Slurry nach Anspruch 1, **dadurch gekennzeichnet, dass** sie einen Festkörpergehalt von 10 bis 60 Gew.%, insbesondere 20 bis 50 Gew.-%, hat.

3. Die Pulverklarlack-Slurry nach Anspruch 1 oder 2, **dadurch gekennzeichnet, dass** die mittlere Teilchengröße der festen sphärischen Partikel bei 3 bis 15 µm liegt.

4. Die Pulverklarlack-Slurry nach einem der Ansprüche 1 bis 3, **dadurch gekennzeichnet, dass** die festen sphärischen Partikel Polyole als Bindemittel und blockierte Polyisocyanate und/oder Tris(alkoxicarbonylamino)triazine als Vernetzer enthalten.

5. Die Pulverklarlack-Slurry nach Anspruch 4, **dadurch gekennzeichnet, dass** sie Polyacrylate als Bindemittel und blockierte Polyisocyanate als Vernetzer enthält.

6. Die Pulverklarlack-Slurry nach einem der Ansprüche 1 bis 5, **dadurch gekennzeichnet, dass** sie eine Mindestfilmbildetemperatur von mehr als 20°C, insbesondere mehr als 30°C, aufweist.

7. Verfahren zur Herstellung einer strukturviskosen, von organischen Lösemitteln und externen Emulgatoren freien Pulverklarlack-Slurry nach Anspruch 1 durch
1) Emulgieren einer organischen Lösung, enthaltend Bindemittel und Vernetzer, wodurch eine Emulsion vom Typ Öl-in-Wasser resultiert,
2) Entfernen des organischen Lösemittels oder der organischen Lösemittel und
3) teilweisen oder völligen Ersatz des entfernten Lösemittelvolumens durch Wasser, wodurch eine Pulverklarlack-Slurry, mit festen sphärischen Partikeln resultiert,
**dadurch gekennzeichnet, dass** der Pulverklarlack-Slurry
4) noch mindestens ein ionischer, insbesondere anionischer, Verdicker und mindestens ein nicht ionischer Assoziativ-Verdicker zugesetzt wird.

8. Das Verfahren nach Anspruch 7, **dadurch gekennzeichnet, dass** man hierbei mit Wasser mischbare organische Lösemittel verwendet.

9. Das Verfahren nach Anspruch 7 oder 8, **dadurch gekennzeichnet, dass** man die organischen Lösemittel bei Temperaturen entfernt, welche unterhalb der Glastemperatur Tg der Bindemittel liegt.

10. Das Verfahren nach einem der Ansprüche 7 bis 9, **dadurch gekennzeichnet, dass** die festen sphärischen Partikel eine mittlere Teilchengröße von 3 bis 15 µm aufweisen.

11. Das Verfahren nach einem der Ansprüche 7 bis 10, **dadurch gekennzeichnet, dass** die Pulverklarlack-Slurry einen Gehalt an Ionen bildenden Gruppen von 0,05 bis 0,5 und insbesondere 0,05 bis 0,3 meq/g und einen Gehalt an Neutralisationsmitteln von 0,05 bis 0,5 und insbesondere 0,05 bis 0,3 meq/g aufweist.

12. Verwendung der Pulverklartack-Slurry gemäß einem der Ansprüche 1 bis 6 oder der gemäß einem der Ansprüche 7 bis 11 hergestellten Pulverklarlack-Slurry für die Herstellung von Klarlacken für die Automobilerst- und die Automobilreparaturlackierung und die industrielle Lackierung.

13. Verwendung der Pulverklarlack-Slurry gemäß einem der Ansprüche 1 bis 6 oder der gemäß einem der Ansprüche 7 bis 11 hergestellten Pulverklarlack-Slurry zur Beschichtung von Formteilen, insbesondere aus Metall, Glas, Holz und/oder Kunststoff.

## Claims

1. Pseudoplastic powder clearcoat slurry which is free from organic solvents and external emulsifiers and comprises solid spherical particles with an average size of from 0.8 to 20 µm and a maximum size of 30 µm, at least one ionic thickener and at least one nonionic associative thickener, the powder clearcoat slurry having an ion-forming group content of from 0.05 to 1 meq/g, a neutralizing agent content of from 0.05 to 1 meq/g, and a viscosity of (i) from 50 to 1500 mPas at a shear rate of 1000 s⁻¹, (ii) from 150 to 8000 mPas at a shear rate of 10 s⁻¹, and (iii) from 180 to 12 000 mPas at a shear rate of 1 s⁻¹.

2. The powder clearcoat slurry according to Claim 1, **characterized in that** it has a solids content of from 10 to 60% by weight, in particular from 20 to 50% by weight.

3. The powder clearcoat slurry according to Claim 1 or 2, **characterized in that** the average size of the solid spherical particles is from 3 to 15 µm.

4. The powder clearcoat slurry according to any of Claims 1 to 3, **characterized in that** the solid spherical particles comprise polyols as binders and blocked polyisocyanates and/or tris(alkoxycarbonylamino)triazines as crosslinking agents.

5. The powder clearcoat slurry according to Claim 4, **characterized in that** it comprises polyacrylates as binders and blocked polyisocyanates as crosslinking agents.

6. The powder clearcoat slurry according to any of Claims 1 to 5, **characterized in that** it has a minimum film-forming temperature of more than 20°C, in particular more than 30°C.

7. Process for preparing a pseudoplastic powder clearcoat slurry free from organic solvents and external emulsifiers according to Claim 1 by
1) emulsifying an organic solution comprising binder and crosslinker, to give an emulsion of the oil-in-water type,
2) removing the organic solvent or the organic solvents, and
3) replacing by water some or all of the volume of solvent removed, to give a powder clearcoat slurry comprising solid spherical particles,
**characterized in that**
4) additionally, at least one ionic, especially anionic, thickener and at least one nonionic associative thickener are added to the powder clearcoat slurry.

8. The process according to Claim 7, **characterized in that** water-miscible organic solvents are used.

9. The process according to Claim 7 or 8,
**characterized in that** the organic solvents are removed at temperatures below the glass transition temperature Tg of the binders.

10. The process according to any of Claims 7 to 9, **characterized in that** the solid spherical particles have an average size of from from 3 to 15 µm.

11. The process according to any of Claims 7 to 10, **characterized in that** the powder clearcoat slurry has an ion-forming group content of from 0.05 to 0.5, and in particular from 0.05 to 0.3 meq/g, and a neutralizing agent content of from 0.05 to 0.5, and in particular from 0.05 to 0.3 meq/g.

12. Use of the powder clearcoat slurry according to any of Claims 1 to 6 or of the powder clearcoat slurry prepared according to any of Claims 7 to 11 to produce clearcoats for automotive OEM finishing and automotive refinish and for industrial coating.

13. Use of the powder clearcoat slurry according to any of Claims 1 to 6 or of the powder clearcoat slurry prepared according to any of Claims 7 to 11 to coat moldings, especially moldings of metal, glass, wood and/or plastic.

## Revendications

1. Suspension de vernis en poudre à viscosité inhérente, exempte de solvants organiques et d'émulsifiants externes, contenant des particules solides sphériques ayant une taille moyenne de particule de 0,8 à 20 µm et une taille maximale de particule de 30 µm, au moins un épaississant ionique et au moins un épaississant associatif non ionique, la suspension de vernis en poudre ayant une teneur en groupes formant des ions de 0,05 à 1 mEq/g, une teneur en agents de neutralisation de 0,05 à 1 mEq/g et une viscosité (i) de 50 à 1500 mPa.s à une vitesse de cisaillement de 1 000 s⁻¹, (ii) de 150 à 8 000 mPa.s à une vitesse de cisaillement de 10 s⁻¹ et (iii) de 180 à 12 000 mPa.s à une vitesse de cisaillement de 1 s⁻¹.

2. Suspension de vernis en poudre selon la revendication 1, **caractérisée en ce qu'**elle a une teneur en solides de 10 à 60 % en poids, en particulier de 20 à 50 % en poids.

3. Suspension de vernis en poudre selon la revendication 1 ou 2, **caractérisée en ce que** la taille moyenne de particule des particules solides sphériques va de 3 à 15 µm.

4. Suspension de vernis en poudre selon l'une quelconque des revendications 1 à 3, **caractérisée en ce que** les particules solides sphériques contiennent des polyols en tant que liant et des polyisocyanates bloqués et/ou des tris(alcoxycarbonylamino)triazines en tant qu'agent de réticulation.

5. Suspension de vernis en poudre selon la revendication 4, **caractérisée en ce qu'**elle contient des polyacrylates en tant que liant et des polyisocyanates bloqués en tant qu'agent de réticulation.

6. Suspension de vernis en poudre selon l'une quelconque des revendications 1 à 5, **caractérisée en ce qu'**elle présente une température minimale de formation de feuil de plus de 20 °C, en particulier de plus de 30 °C.

7. Procédé pour la préparation d'une suspension de vernis en poudre à viscosité inhérente, exempte de solvants organiques et d'émulsifiants externes selon la revendication 1, par
1) émulsification d'une solution organique contenant des liants et des agents de réticulation, de sorte qu'il en résulte une émulsion du type huile-dans-eau,
2) élimination du solvant organique ou des solvants organiques et
3) remplacement partiel ou total du volume de solvant éliminé par de l'eau, de sorte qu'il en résulte une suspension de vernis en poudre comportant des particules solides sphériques,
**caractérisé en ce qu'**à la suspension de vernis en poudre
4) on ajoute encore au moins un épaississant ionique, en particulier anionique, et au moins un épaississant associatif non ionique.

8. Procédé selon la revendication 7, **caractérisé en ce que** dans ce procédé on utilise des solvants organiques miscibles à l'eau.

9. Procédé selon la revendication 7 ou 8, **caractérisé en ce qu'**on élimine le solvant organique à des températures qui se situent au-dessous de la température de transition vitreuse Tg des liants.

10. Procédé selon l'une quelconque des revendications 7 à 9, **caractérisé en ce que** les particules solides sphériques ont une taille moyenne de particule de 3 à 15 µm.

11. Procédé selon l'une quelconque des revendications 7 à 10, **caractérisé en ce que** la suspension de vernis en poudre présente une teneur de 0,05 à 0,5 et en particulier de 0,05 à 0,3 mEq/g en groupes formant des ions et une teneur de 0,05 à 0,5 et en particulier de 0,05 à 0,3 mEq/g en agents de neutralisation.

12. Utilisation de la suspension de vernis en poudre selon l'une quelconque des revendications 1 à 6 ou de la suspension de vernis en poudre préparée selon l'une quelconque des revendications 7 à 11, pour la fabrication de vernis pour la première mise en peinture d'automobiles et le peinturage de réparation d'automobiles et le peinturage industriel.

13. Utilisation de la suspension de vernis en poudre selon l'une quelconque des revendications 1 à 6 ou de la suspension de vernis en poudre préparée selon l'une quelconque des revendications 7 à 11, pour le revêtement de pièces moulées, en particulier en métal, verre, bois et/ou matière plastique.
